Europäisches Patentamt

European Patent Office

Office européen des brevets

(19)

(11) EP 0 790 495 A1

(12) ## DEMANDE DE BREVET EUROPEEN

(43) Date de publication:
20.08.1997 Bulletin 1997/34

(51) Int Cl.⁶: **G01N 15/02**

(21) Numéro de dépôt: 97400328.7

(22) Date de dépôt: 13.02.1997

(84) Etats contractants désignés:
**AT DE DK GB IT**

(30) Priorité: **15.02.1996 FR 9601869**

(71) Demandeur: **COMMISSARIAT A L'ENERGIE ATOMIQUE**
**75015 Paris Cédex 15 (FR)**

(72) Inventeurs:
- **Boulaud, Denis**
  **75015 Paris (FR)**
- **Pourprix, Michel**
  **91310 Montlhery (FR)**

(74) Mandataire: **Dubois-Chabert, Guy et al**
**c/o BREVATOME**
**25, rue de Ponthieu**
**75008 Paris (FR)**

(54) **Sélecteur de mobilité dynamique des particules d'un aérosol**

(57)     L'invention concerne un sélecteur de mobilité dynamique de particules, comportant deux disques coaxiaux (30, 32), espacés et parallèles, définissant une zone (31) de sélection dynamique, le disque supérieur comportant une fente annulaire de rayon $r_1$ et une aspiration centrale (38) pour faire circuler, dans la zone de sélection dynamique, un écoulement d'air laminaire, centripète et stable.

Une ouverture annulaire (36), de rayon moyen $r_2 < r_1$, peut être prévue dans le disque inférieur (32).

Application à un spectromètre de mobilité dynamique, à un dispositif pour la mesure de la granulométrie d'un aérosol, et à un générateur d'aérosols monodispersés.

FIG. 3A

**Description**

Domaine technique et art antérieur

L'invention concerne le domaine de la sélection et/ou de la caractérisation d'aérosols, en particulier pour des particules supermicroniques (notamment dans la gamme de 2 à 20 µm).

Dans le domaine de la métrologie des aérosols microniques et submicroniques, il existe de nombreux dispositifs pour la mesure en ligne de la distribution en dimension des particules. On peut citer, par exemple, les dispositifs mettant en oeuvre des méthodes électriques, et notamment les analyseurs différentiels de mobilité électrique, les méthodes optiques, et les méthodes aérodynamiques qui fournissent respectivement une distribution en dimension basée sur la mobilité électrique des particules, les propriétés optiques des particules et l'inertie des particules.

Dans le cas des particules supermicroniques, si l'on souhaite caractériser le comportement inertiel d'un aérosol, on doit faire appel aux méthodes aérodynamiques. Les dispositifs les plus couramment utilisés mettent en oeuvre un impacteur, ou un cyclone, ou une centrifugeuse, ou une chambre de sédimentation. En général ces dispositifs n'ont qu'un pouvoir moyen de résolution en dimension, et nécessitent d'effectuer un prélèvement, puis une analyse ultérieure, pour accéder à la granulométrie. Les procédures de mesure sont donc longues, coûteuses, fastidieuses et ne permettent pas de fournir le renseignement en ligne.

Il existe donc un besoin de disposer d'appareils, permettant de caractériser le comportement aérodynamique des particules, et permettant d'accéder en ligne à la granulométrie de l'aérosol avec une très bonne résolution en dimension.

Avant d'exposer plus en détail des réalisations connues de ce type d'appareil, on peut rappeler que la mobilité dynamique, B, d'une particule de diamètre $d_p$ s'écrit :

$$B = \frac{1}{3\pi\mu d_p} \tag{1}$$

où µ représente la viscosité dynamique du gaz porteur.

Lorsque le diamètre de la particule se rapproche de $\ell$, libre parcours moyen des molécules du fluide, le milieu ne peut plus être considéré comme continu, et l'on introduit un terme de correction $C(d_p)$. La mobilité dynamique s'écrit alors :

$$B = \frac{C(d_p)}{3\mu\pi d_p} \tag{2}$$

avec

$$C(d_p) = 1 + Kn\left[1,257 + 0,4\exp\left(\frac{-1,1}{Kn}\right)\right] \tag{3}$$

où

$$Kn = \frac{2\ell}{d_p} \text{ est le nombre de Knudsen} \tag{3'}$$

Le produit de la masse de la particule m par la mobilité dynamique correspond au temps de relaxation $\tau$.

$$\tau = mB = \frac{d_p^2 \rho_p C(d_p)}{18\mu} \tag{4}$$

où $\rho_p$ est la masse volumique de la particule.

$\tau$ caractérise le temps nécessaire à une particule pour ajuster sa vitesse à un nouveau champ de force ou à toute nouvelle accélération provoquée par des variations du vecteur vitesse du fluide.

Dans le cas où la loi de Stokes s'applique, la vitesse de chute ou de sédimentation s'écrit simplement :

$$V_S = mBg = \tau g \qquad (5)$$

A partir de la vitesse de sédimentation d'une particule, on a forgé le concept de diamètre aérodynamique équivalent, qui serait le diamètre de la sphère de densité 1 ayant la même vitesse de sédimentation que la particule considérée (c'est le diamètre $d_a$ pour lequel $\rho = 1$ dans la formule (4) ci-dessus).

On connaît actuellement deux types de dispositifs permettant d'accéder en ligne, et avec une bonne résolution, à la granulométrie caractéristique du comportement aérodynamique.

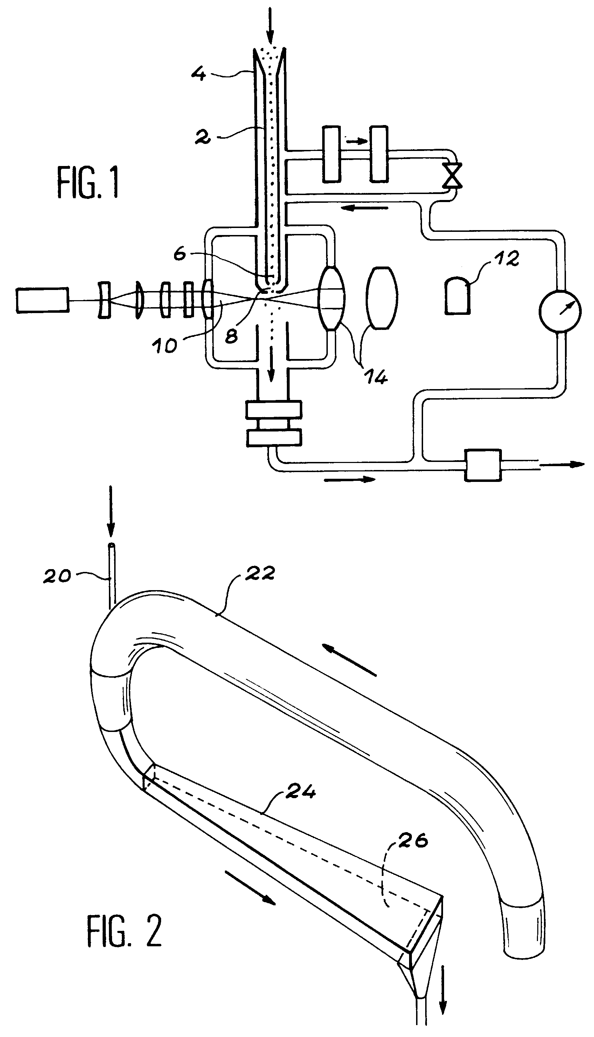

Le premier de ces dispositifs est décrit dans les articles de J.C. WILSON et al., paru dans "Journal of Aerosol Science", vol. 11, p. 139-150, 1980, et de J.K. AGARWAL et al., paru dans "Proceedings of the Annual Conference of the GAeF", p. 222-223, 1982. Un schéma représentant ce dispositif est donné en figure 1. Sur cette figure, les références 2 et 4 désignent respectivement un tube intérieur et un tube extérieur, terminés chacun par un orifice intérieur 6 et un orifice extérieur 8. L'aérosol porteur des particules à caractériser est fortement accéléré en passant au travers de l'orifice 8. Du fait de leur inertie, caractérisée par leur temps de relaxation $\tau$, les particules vont mettre un certain temps avant d'ajuster leur vitesse à celle du fluide porteur, ce retard à l'ajustement étant proportionnel au diamètre aérodynamique. Ainsi, ce dernier peut être déterminé en mesurant la vitesse de chaque particule juste après l'orifice 8. Cette vitesse est mesurée à l'aide d'un faisceau laser 10 dédoublé qui forme deux points en travers desquels les particules passent. Chaque particule produit ainsi deux impulsions de lumière converties en impulsion électrique par un photomultiplicateur 12. Le temps entre les deux impulsions est mesuré par une horloge ayant un pouvoir de résolution de 2 ns. Pour une particule de 0,5 μm de diamètre, le temps de vol est de 800 ns et pour une grosse particule de 30 μm, il peut atteindre 5000 ns, ce domaine étant celui couvert par ce dispositif encore appelé "APS" (Aerodynamic Particles Sizer).

Un avantage de ce dispositif est son très bon pouvoir de résolution et son fonctionnement automatique.

Un problème lié à ce dispositif est que les particules solides et liquides de même diamètre aérodynamique ne donnent pas la même réponse, étant donné que les particules liquides se déforment sous l'effet de l'accélération brutale dans l'orifice. La mesure des fibres peut également poser des difficultés. Par ailleurs, ce dispositif détermine un temps de relaxation lors d'une accélération brutale dans un écoulement. Dans ces conditions, le passage du temps de relaxation au diamètre aérodynamique n'est pas toujours évident, et va dépendre de la rigidité et de la forme des particules. Enfin, ce dispositif ne peut pas être utilisé comme générateur d'aérosols monodispersés, en particulier pour les particules supermicroniques.

Un autre dispositif est décrit dans l'article de W.D. GRIFFITHS et al., paru dans "Journal of Aerosol Science", vol. 15, n°4, p. 491-502, 1984. Ce dispositif est du type "TIMBRELL". Il permet de classer avec précision les particules en fonction de leur diamètre aérodynamique. Le principe de cet appareil va être rappelé en liaison avec la figure 2. Les particules d'un aérosol sont introduites par l'intermédiaire d'un petit tube 20 dans un écoulement laminaire 22 d'air propre qui va les entraîner en direction d'une chambre de sédimentation 24. Cette chambre est en forme de coin avec une hauteur constante. Les particules peuvent sédimenter, en fonction de leur diamètre aérodynamique, sur la partie inférieure 26 de la chambre, implantée horizontalement. Dans une première version de l'appareil "TIMBRELL", les particules sont récupérées sur des lames de microscopes optiques pour une analyse ultérieure.

Le dispositif a été modifié, en particulier comme exposé dans l'article de W.D. GRIFFITHS mentionné ci-dessus, afin de pouvoir extraire des particules ayant un diamètre bien défini, et de pouvoir les détecter en ligne. En particulier, la modification proposée dans ce document permet de sélectionner 4 dimensions de particules, comprises entre 1 et 8 μm. Ce dispositif modifié reste d'un emploi très délicat, et aucun développement commercial n'a pu être réalisé jusqu'à maintenant. Un des problèmes posés par l'appareil du type "TIMBRELL" est qu'il ne permet pas d'obtenir un bon écoulement laminaire du flux d'air dans lequel les particules sont introduites. En outre, ce dispositif est assez peu compact.

Exposé de l'invention

L'invention propose un nouveau sélecteur de mobilité dynamique des particules d'un aérosol contenu dans une atmosphère, permettant en particulier de résoudre les problèmes ci-dessus.

De manière plus précise, l'invention a pour objet un sélecteur de mobilité dynamique des particules d'un aérosol contenu dans une atmosphère, caractérisé en ce qu'il comporte :

- deux disques coaxiaux, espacés et parallèles, l'espace entre les deux disques, définissant une zone de sélection dynamique, communiquant avec l'atmosphère à examiner à travers une fente annulaire de rayon $r_1$ pratiquée dans

le premier disque,

- une aspiration centrale permettant de faire circuler, dans la zone de sélection dynamique, un écoulement d'air laminaire, centripète et stable.

Une ouverture annulaire, de rayon moyen $r_2$ ($r_2<r_1$) peut être prévue dans le second disque.

Dans ce dispositif les particules sont introduites par une fente de rayon $r_1$, située au-dessus de la zone de sélection, et sont entraînées vers le second disque situé dans la partie inférieure de la zone de sélection (vers la fente d'extraction si une telle fente est prévue). Le mouvement des particules s'effectue uniquement sous l'action conjuguée d'un écoulement d'air entre les deux disques et du champ de pesanteur.

Du fait de la structure à symétrie circulaire, le dispositif selon l'invention autorise un écoulement radial parfaitement laminaire, stable et contrôlé. En outre, il est très compact.

Il permet d'accéder directement au temps de relaxation, à la mobilité dynamique et à la vitesse de sédimentation des particules, qui est liée de manière simple au temps de relaxation (relation : $V_S=\tau g$) et qui définit le diamètre aérodynamique équivalent. Au contraire, un appareil de type APS détermine un temps de relaxation lors d'une accélération brutale dans un écoulement, et le passage du temps de relaxation au diamètre aérodynamique n'est pas aisé.

Il en résulte que le dispositif selon l'invention permet de sélectionner des particules de même diamètre aérodynamique. Le sélecteur peut donc être avantageusement utilisé comme générateur d'aérosols monodispersés, notamment pour les aérosols supermicroniques. Cette fonction de générateur d'aérosols ne peut pas être réalisée avec un appareil du type APS.

Un autre problème particulier résolu dans le cadre de l'invention est lié au fait que, après extraction par la fente de sélection, les particules n'ont pas nécessairement les mêmes trajectoires.

Il se produit, de ce fait, un étalement du temps de transit et une certaine dispersion à travers l'appareil et ses moyens d'extraction des particules, ce qui peut être préjudiciable dans certaines applications.

Pour résoudre ce problème, selon un mode particulier de réalisation, le sélecteur peut en outre comporter :

- un troisième disque situé en regard du second disque,
- des moyens pour injecter, dans l'espace compris entre le second et le troisième disques, un écoulement d'air, radial et laminaire à partir de la périphérie de ces deux derniers disques,
- un orifice d'extraction central prévu dans le troisième disque.

Dans cette configuration, on réalise donc un deuxième étage à l'aide des troisième et second disques et on réalise ce qu'on appelle un "confinement dynamique" à l'aide d'un écoulement d'air filtré entre ces deux disques. Cet écoulement canalise les particules dès leur extraction du premier étage. Sortant ensuite du second étage, les particules sont ensuite véhiculées dans un conduit assurant leur transfert vers l'extérieur, toujours en écoulement laminaire, avec la particularité qu'elles se trouvent confinées au voisinage du centre de l'écoulement, et ceci sans contact avec les parois (donc sans perte) et avec des trajectoires identiques (donc avec des temps de transit identiques).

Selon un autre mode particulier de réalisation, la fente d'extraction peut se réduire à un orifice central.

Par rapport aux dispositifs avec fente d'extraction annulaire, le sélecteur à orifice central d'extraction est plus simple à réaliser, et garantit de meilleures performances, avec un temps de transit plus court dans le circuit d'extraction des particules. Il évite les problèmes de sédimentation dans ce circuit.

Des moyens peuvent être prévus pour maintenir l'espace entre les deux premiers disques sous pression réduite. Ceci permet, à dimension de particules fixée, d'augmenter le temps de relaxation, et donc la vitesse de sédimentation.

Des moyens peuvent être prévus pour faire varier le débit $Q_o$ de l'écoulement d'air laminaire centripète et stable. On peut ainsi sélectionner différents diamètres aérodynamiques.

L'invention concerne également un spectromètre de mobilité dynamique de particules d'un aérosol contenu dans une atmosphère, comportant un sélecteur de mobilité dynamique muni de moyens de variation du débit $Q_o$, tel que décrit ci-dessus, et des moyens de détection des particules sélectionnées.

Avantageusement, ces moyens de détection peuvent être des moyens optiques.

L'invention concerne également un dispositif pour la mesure de la granulométrie des aérosols, suivant leur diamètre aérodynamique, comportant un sélecteur de mobilité dynamique tel que décrit ci-dessus, des moyens de variation du débit de l'écoulement d'air laminaire, centripète et stable, des moyens de détection des particules sélectionnées, et des moyens de calcul de la granulométrie de l'aérosol.

Un autre objet de l'invention concerne un procédé de sélection de mobilité dynamique de particules d'un aérosol contenu dans une atmosphère, caractérisé en ce qu'il comporte :

- l'introduction de l'aérosol, dans une zone de sélection dynamique constituée par l'espace situé entre deux disques, espacés et parallèles, et à travers une fente annulaire de rayon $r_1$ pratiquée dans le premier disque,
- l'aspiration d'un débit d'air $Q_o$, par une aspiration centrale, afin de faire circuler dans la zone de sélection dynamique

un écoulement d'air laminaire, centripète et stable, le mouvement des particules s'effectuant uniquement sous l'action de cet écoulement d'air et du champ de pesanteur.

La sélection des particules peut être effectuée par une ouverture annulaire, de rayon moyen $r_2$ ($r_2<r_1$), prévue dans le second disque.

Les avantages liés à ce procédé sont ceux qui ont été décrits ci-dessus pour le sélecteur de mobilité dynamique selon l'invention.

Un troisième disque peut être situé en regard du second disque et être muni d'un orifice d'extraction central, un écoulement d'air radial et laminaire circulant dans l'espace compris entre le second et le troisième disques à partir de leur périphérie. Ce procédé permet d'assurer alors un écoulement laminaire des particules, tout en les confinant au voisinage du centre de l'écoulement, et ceci sans contact avec les parois et avec des trajectoires identiques.

L'ouverture prévue dans le second disque peut en particulier se réduire à un seul orifice d'extraction central. Dans ce cas, le procédé est plus simple à réaliser, garantit de meilleures performances, avec moins de pertes de particules (notamment par sédimentation) et un temps de transit plus court dans le circuit d'extraction.

Afin d'augmenter la dynamique du dispositif pour des particules submicroniques, la zone de sélection peut fonctionner sous pression réduite.

L'invention concerne également un procédé pour réaliser un spectre de mobilité dynamique de particules d'un aérosol contenu dans une atmosphère, mettant en oeuvre un procédé de sélection de mobilité dynamique des particules, tel que décrit ci-dessus, des moyens de variation du débit $Q_o$, et la détection, par exemple par des moyens optiques, des particules sélectionnées.

Un procédé de mesure de la granulométrie d'aérosols, suivant leur diamètre aérodynamique, comporte, selon l'invention, un procédé de sélection tel que décrit ci-dessus, la détection des particules sélectionnées, et une étape de calcul de la granulométrie des aérosols.

Brève description des figures

De toute façon, les caractéristiques et avantages de l'invention apparaîtront mieux à la lumière de la description qui va suivre. Cette description porte sur les exemples de réalisation, donnés à titre explicatif et non limitatif, en se référant à des dessins annexés sur lesquels :

- les figures 1 et 2, déjà décrites, représentent des dispositifs de l'art antérieur permettant d'accéder en ligne à la granulométrie caractéristique du comportement aérodynamique d'un aérosol,
- les figures 3A et 3B représentent deux variantes d'un sélecteur de mobilité dynamique selon l'invention,
- la figure 4 représente une variante d'un dispositif selon l'invention,
- la figure 5 représente un dispositif selon l'invention pour la mesure du diamètre aérodynamique des particules d'un aérosol.

Description détaillée de modes de réalisation de l'invention

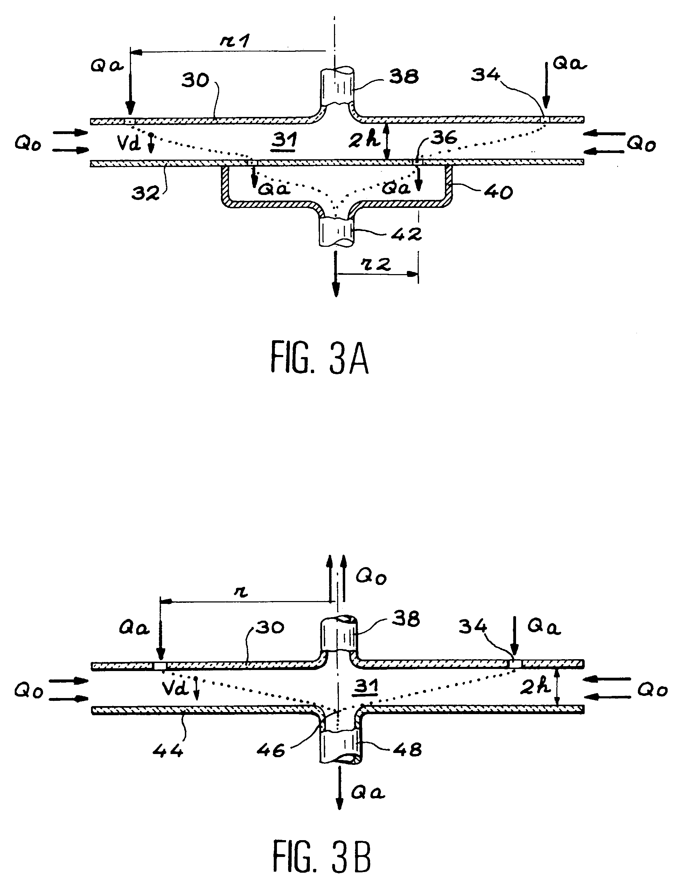

Un premier mode de réalisation d'un sélecteur de mobilité dynamique des particules d'un aérosol, selon l'invention, va être décrit en liaison avec la figure 3A. Sur cette figure, les références 30 et 32 désignent deux disques horizontaux, parallèles et concentriques, définissant entre eux une zone 31 dite zone de sélection dynamique. Le disque supérieur 30 présente une fente annulaire 34, de rayon $r_1$, par laquelle un aérosol est introduit avec un débit $Q_a$. Un conduit ou tubulure d'aspiration centrale 38, ménagé dans le disque supérieur 30, extrait un débit d'air $Q_o$ de la zone de sélection dynamique 31. Dans le second disque 32 est pratiquée une ouverture annulaire 36 de rayon $r_2$ ($r_2<r_1$), · Lorsque l'appareil fonctionne, cette fente 36 est traversée par un débit $Q_a$ de particules sélectionnées. Entre les deux disques, à la périphérie de l'espace 31, est injecté, par des moyens non représentés sur la figure 3A, un gaz d'entraînement (en général de l'air filtré). Du fait de la structure circulaire de l'appareil, c'est un écoulement laminaire qui circule entre les deux disques, avec un débit $Q_o$ jusqu'à la tubulure d'aspiration 38.

Par un boîtier 40, tel qu'un boîtier cylindrique, et un conduit 42, les particules sélectionnées peuvent ensuite être dirigées vers tout type de dispositif convenant à l'application envisagée, par exemple un compteur de particules à étalonner avec les particules calibrées et produites, ou bien vers un détecteur tel qu'un détecteur optique.

Il est également possible de recueillir les particules sélectionnées dans un collecteur, par exemple un collecteur mécanique. Un tel collecteur mécanique comporte un boîtier tel que le boîtier 40 ainsi qu'une membrane poreuse sur laquelle les particules se déposent. La membrane peut ensuite être analysée, par exemple par pesée.

Dans une variante, le conduit d'aspiration central 38 est ménagé dans le disque inférieur 32 et traverse le boîtier 40.

Le mouvement des particules, depuis la fente d'introduction 34 jusqu'à la fente de sortie 36, s'effectue sous l'action conjuguée :

- d'un écoulement d'air filtré au débit $Q_o$, radial et laminaire, établi entre les deux disques,
- du champ de pesanteur, qui induit une vitesse de dérive $V_d$ ; cette vitesse de dérive est égale à la vitesse de sédimentation des particules dans le cas particulier où les disques sont maintenus horizontaux.

On peut montrer que les particules sélectionnées par la fente 36, au débit $Q_a$, ont un temps de relaxation $\tau$ donné par l'équation :

$$\tau \ = \ \frac{Q_o}{\pi g\left(r_1^2 \ - \ r_2^2\right)} \qquad (6)$$

où g désigne l'accélération de la pesanteur.

La vitesse de chute ou de sédimentation s'écrit alors simplement : $V_S = \tau g$.

A partir de la vitesse de sédimentation d'une particule, on obtient le diamètre aérodynamique équivalent, obtenu à partir des formules (6) et (4) ci-dessus ($\rho = 1$ dans l'équation (4)).

Par conséquent, le dispositif permet bien de sélectionner des particules ayant une mobilité dynamique donnée, un temps de relaxation donné, donc une vitesse de sédimentation donnée et un diamètre aérodynamique donné dès lors que sont connus le débit $Q_o$ et les caractéristiques géométriques de l'appareil. Ces dernières étant fixées, il suffit de faire varier le débit $Q_o$ de l'écoulement pour sélectionner des particules ayant des temps de relaxation différents, donc des vitesses de sédimentation différentes, donc des diamètre aérodynamiques différents. Le dispositif peut donc parfaitement convenir pour réaliser un générateur d'aérosols monodispersés : lorsqu'on souhaite produire des particules de diamètre donné, il suffit de calculer le débit $Q_o$ à imposer à un appareil de caractéristiques géométriques données.

L'extraction des particules par une fente annulaire 36 nécessite de mettre en oeuvre un boîtier 40 entre la fente et le conduit d'extraction 42. Le transport des particules dans les circuits du système peut entraîner des pertes par diffusion au voisinage des parois, ainsi que des pertes par sédimentation, notamment dans le boîtier 40. De plus, le temps de transit dans ce boîtier, qui peut être long, n'est pas le même pour toutes les particules, et il se produit, de ce fait, une certaine dispersion à travers l'appareil, ce qui peut être préjudiciable dans certaines applications.

Un second mode de réalisation, qui va être décrit en liaison avec la figure 3B, permet de résoudre ce problème. Ce second dispositif fonctionne sur les mêmes principes que le premier, essentiellement avec les mêmes éléments, mais la fente d'extraction annulaire du disque inférieur 44 est réduite à un seul orifice circulaire central 46. Cet orifice débouche dans une conduite d'extraction 48. Sur la figure 3B, des références identiques à celles de la figure 3A y désignent par ailleurs les mêmes éléments.

Là encore, on peut faire déboucher l'orifice d'extraction 46 sur un collecteur, par exemple un collecteur mécanique.

L'orifice central d'extraction 46 est un point singulier aéraulique puisqu'il correspond au point d'arrêt de l'écoulement laminaire. Les particules qui viennent se déposer sur le second disque 44, au centre, sont aspirées avec un débit $Q_a$ à travers cet orifice 46. Ces particules ont un temps de relaxation $\tau = \frac{Q_o}{\pi g r_1^2}$.

Le diamètre $\phi$ de cet orifice 46 est de préférence choisi de façon à assurer une bonne sélectivité des particules (si le diamètre est important, la sélectivité est faible) mais aussi de façon à ne pas perturber l'écoulement du fluide qui le traverse (si le diamètre est faible, un phénomène de "jet" se produit au niveau de cet orifice). Ce dispositif à extraction centrale garantit moins de pertes des particules après leur sortie du sélecteur, ainsi qu'un temps de transit plus court dans les circuits d'extraction.

Le dispositif selon l'invention a été présenté avec un disque 32, 44 muni d'une ouverture (fente ou orifice) de sélection. Il est également possible de remplacer ce disque par un disque plein. Dans ce cas, les particules se déposent sur ce disque plein, les particules déposées à une distance r quelconque de l'axe de l'appareil ayant un temps de relaxation donné par l'équation (6), dans laquelle on remplace $r_2$ par r.

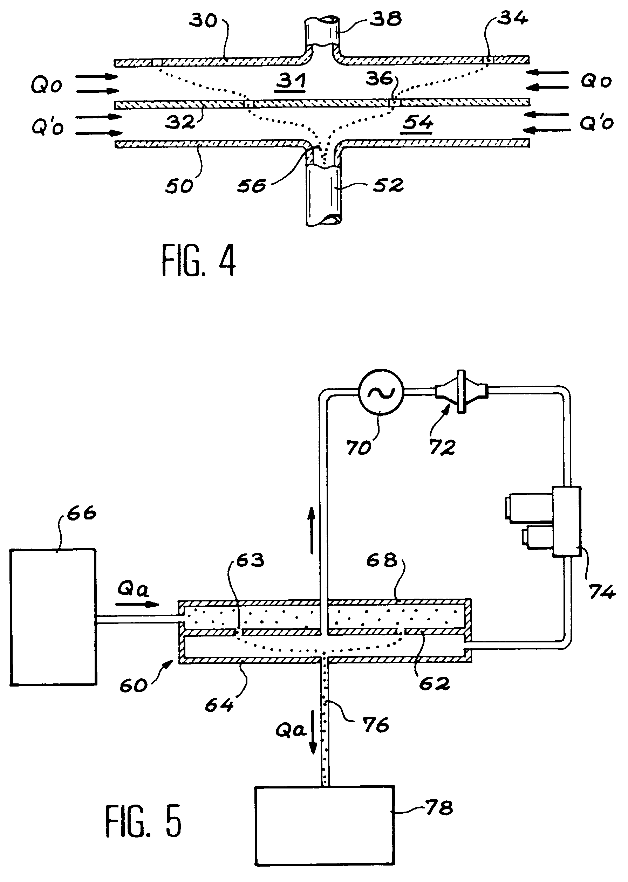

Une autre variante pouvant être mise en oeuvre avec l'un ou l'autre des deux modes de réalisation décrits ci-dessus, est illustrée sur la figure 4. La partie supérieure (ou premier étage) du dispositif est identique à la partie supérieure de celui représenté sur la figure 3A.

Un second étage récolte les particules, ayant même mobilité dynamique, sélectionnées par le premier étage. Ce second étage est constitué d'une part du second disque 32 déjà décrit ci-dessus, d'autre part d'un troisième disque 50 situé en regard du second, et définissant avec ce dernier un espace 54. A partir de la périphérie de cet espace 54, on peut imposer, à l'aide de moyens connus par ailleurs de l'homme de l'art, un débit $Q'_o$ d'air filtré et radial. $Q'_o$ est choisi de telle sorte que l'écoulement d'air dans le second étage soit laminaire. Ainsi, les particules sélectionnées à travers l'ouverture 36 sont canalisées dès leur extraction du premier étage.

Le troisième disque 50 présente en son centre une ouverture 56 qui débouche sur un conduit 52. le centre de l'ouverture 56 est de préférence aligné avec les centres des disques 32 et 30. Les particules sélectionnées s'écoulent toujours en écoulement laminaire, et sont confinées au voisinage du centre de l'écoulement, dans l'axe de l'ouverture 52, sans contact avec les parois. De plus, les trajectoires suivies par les particules sont identiques dans tout l'appareil, y compris dans le deuxième étage et dans le conduit 52, donc les particules s'écoulent avec des temps de transit identiques et faciles à déterminer puisque les dimensions géométriques du système sont facilement déterminables.

Là encore, la fente annulaire 36 peut être ramenée à un orifice central d'extraction, ce qui renforce encore l'alignement des particules lors de l'extraction.

Quel que soit le mode de réalisation retenu, le sélecteur de mobilité dynamique décrit ci-dessus peut être couplé à un détecteur qui permet de compter les particules sélectionnées. Un tel détecteur peut être par exemple un détecteur optique, en particulier du type à diffusion de lumière. Dans ce dernier cas, les particules à analyser sont entraînées par le flux gazeux à travers un faisceau lumineux produit par une source lumineuse. Chaque particule diffuse alors une certaine quantité de lumière qui est ensuite analysée par un photodétecteur. Des moyens d'analyse sont en outre prévus pour recueillir des données et les traiter.

Un spectromètre de mobilité dynamique peut être réalisé, en couplant un sélecteur tel que décrit ci-dessus, avec des moyens pour faire varier le débit $Q_o$ d'air et des moyens de détection ou de comptage des particules sélectionnées.

Quel que soit le mode de réalisation retenu, il est possible de prévoir des moyens pour maintenir le sélecteur ou la zone de sélection (zone 31 sur les figures 3A et 3B) sous une pression réduite. Ceci permet d'accroître le libre parcours moyen des molécules du fluide, et donc d'accroître le nombre de Knudsen Kn et le terme de correction C(d) (voir formules (3) et (3') ci-dessus). Il en résulte, pour une taille d déterminée des particules, un accroissement de $\tau$, de B et de $V_S$ (équations (4) et (5)).

Un dispositif pour la mesure du diamètre aérodynamique des particules d'un aérosol va maintenant être décrit, en liaison avec la figure 5. Sur cette figure, la référence 60 désigne un dispositif de sélection, tel qu'il a été décrit ci-dessus en liaison avec la figure 3B, les références 62 et 64 désignant respectivement les disques parallèles et concentriques définissant la zone de sélection dynamique. Des moyens 66 de génération des particules permettent la mise en suspension des particules que l'on cherche à caractériser. Ces moyens peuvent par exemple comporter un système de pulvérisation de poudres ou de liquides par méthode pneumatique. Un échantillon de gaz contenant les particules est alors introduit en continu, avec un débit $Q_a$, par une fente annulaire 63 qui se situe dans le disque supérieur 62 du sélecteur 60. L'introduction des particules peut se faire par exemple par un étage intermédiaire défini par le disque 62 et un autre disque 68 situé au-dessus du disque 62. Le flux laminaire, centripète et stable est établi dans le sélecteur 60 par un circuit comportant une pompe 70, un filtre 72 et un régulateur de débit 74. Les particules sélectionnées par l'orifice de sortie du sélecteur transitent par une conduite 76 en direction d'un système de détection 78. Conformément à ce qui a été expliqué ci-dessus, les particules comptées par le détecteur 78 sont celles ayant un temps de relaxation (et donc une vitesse de sédimentation et un diamètre aérodynamique) déterminé par le débit $Q_o$.

Comme on l'a déjà vu, un sélecteur selon l'invention peut être utilisé comme générateur d'aérosols monodispersés : toutes les particules extraites du sélecteur ont le même diamètre aérodynamique. Pour modifier ce dernier, il suffit de modifier le débit $Q_o$.

Un autre exemple d'application concerne un dispositif permettant la mesure de la granulométrie des aérosols suivant leurs diamètres aérodynamiques. Si on mesure, pour différents débits $Q_o$, la concentration en particules qui sort du sélecteur par le trou central ou par la fente d'extraction, on peut remonter à la granulométrie de l'aérosol introduit dans le sélecteur. Pour ce faire, il faut tenir compte de la fonction de transfert et des différents paramètres du sélecteur. En effet, pour un débit $Q_o$, la réponse $R(Q_o)$ d'un détecteur placé à la sortie du trou central ou de la fente annulaire d'extraction, est donnée par la relation suivante :

$$R\left(Q_o\right) \ = \ \int_0^\infty Q_a N\left(d_p\right) P\left(d_p, Q_o\right) dd_p$$

où $Q_a$ représente le débit d'injection des aérosols, $P(d_p, Q_o)$ la fonction de transfert du sélecteur, qui est en fait la probabilité d'extraire les particules de diamètre $d_p$ pour un débit $Q_o$ et $N(d_p)dd_p$ la fonction de distribution inconnue. Si on répète l'opération pour plusieurs débit $Q_o$, on obtient différentes réponse $R(Q_o)$ et ainsi un système d'équation qui permet de déterminer la fonction de distribution $N(d_p)dd_p$ par des techniques mathématiques d'inversion classiques.

L'invention est particulièrement adaptée aux particules ayant une inertie suffisante pour pouvoir sédimenter dans le sélecteur, notamment les particules supermicroniques, c'est-à-dire des particules dont le diamètre est supérieur à 1 $\mu$m, en particulier compris entre environ 2 et 20 $\mu$m.

**Revendications**

1. Sélecteur de mobilité dynamique des particules d'un aérosol, contenu dans une atmosphère, caractérisé en ce qu'il comporte :

    - un premier (30, 62) et un second (32, 64) disques coaxiaux, espacés et parallèles, l'espace (31) entre les deux disques définissant une zone de sélection dynamique communiquant avec l'aérosol à examiner à travers une fente annulaire (34, 63) de rayon rl pratiquée dans le premier disque,
    - une aspiration centrale (38) permettant de faire circuler, dans la zone (31) de sélection dynamique, un écoulement d'air laminaire, centripète et stable.

2. Sélecteur de mobilité dynamique selon la revendication 1 comportant en outre une ouverture annulaire (36, 46), de rayon moyen $r_2$ ($r_2<r_1$), prévue dans le second disque.

3. Sélecteur selon la revendication 2, comportant en outre :

    - un troisième disque (50) situé en regard du second disque,
    - des moyens pour injecter, dans l'espace (54) compris entre le second (32) et le troisième (50) disques, un écoulement d'air, radial et laminaire à partir de la périphérie de ces deux derniers disques,
    - un orifice d'extraction central (56) prévu dans le troisième disque.

4. Sélecteur selon l'une des revendications 2 ou 3, l'ouverture prévue dans le second disque se réduisant à un seul orifice (46) d'extraction central.

5. Sélecteur de mobilité dynamique selon l'une des revendications 2 à 4, comportant en outre un collecteur d'aérosols monté en sortie du sélecteur.

6. Sélecteur de mobilité dynamique selon l'une des revendications 1 à 5, comportant en outre des moyens pour maintenir l'espace entre les premier et second disques sous pression réduite.

7. Sélecteur de mobilité dynamique selon l'une des revendications 1 à 6, comportant en outre des moyens pour faire varier le débit d'air introduit entre les premier et second disques.

8. Spectromètre de mobilité dynamique de particules d'un aérosol contenu dans une atmosphère, comportant un sélecteur de mobilité dynamique selon l'une des revendications 2 à 4, des moyens pour faire varier le débit d'air entre les premier et second disques et des moyens de détection (78) des particules sélectionnées.

9. Spectromètre selon la revendication 8, les moyens de détection étant des moyens optiques.

10. Dispositif pour la mesure de la granulométrie d'un aérosol comportant un sélecteur selon l'une des revendications 2 à 4, des moyens pour faire varier le débit d'air entre les premier et second disques, des moyens de détection des particules sélectionnées, et des moyens de calcul de la granulométrie de l'aérosol.

11. Procédé de sélection de mobilité dynamique des particules d'un aérosol contenu dans une atmosphère, caractérisé en ce qu'il comporte :

    - l'introduction de l'aérosol dans une zone de sélection dynamique (31) constituée par l'espace situé entre un premier (30, 62) et un second (32, 64) disques, espacés et parallèles, à travers une fente annulaire (36, 46) de rayon $r_1$ pratiquée dans le premier disque,
    - l'aspiration d'un débit d'air $Q_o$, par une aspiration centrale (38), afin de faire circuler dans la zone de sélection dynamique un écoulement d'air laminaire, centripète et stable, le mouvement des particules s'effectuant uniquement sous l'action de cet écoulement d'air et du champ de pesanteur.

12. Procédé selon la revendication 11, comportant en outre la sélection des particules par une ouverture annulaire (36, 46), de rayon moyen $r_2$ ($r_2<r_1$) prévue dans le second disque.

13. Procédé de sélection selon la revendication 12, un troisième disque (50) étant situé en regard du second disque et muni d'un orifice (56) d'extraction central, un écoulement d'air radial et laminaire circulant dans l'espace compris entre le second (32) et le troisième (50) disques à partir de leur périphérie.

14. Procédé de sélection selon l'une des revendications 12 ou 13, l'ouverture prévue dans le second disque étant réduite à un seul orifice (46) d'extraction central.

15. Procédé de sélection selon l'une des revendications 11 à 14, la zone de sélection dynamique comprise entre les deux disques étant maintenue sous pression réduite.

16. Procédé de sélection selon l'une des revendications 11 à 15, dans lequel on fait varier le débit d'air entre les deux disques.

17. Procédé de réalisation d'une spectrométrie de mobilité dynamique de particules d'un aérosol contenu dans une atmosphère, comportant une sélection par un procédé selon l'une des revendications 12 à 14, avec variation du débit d'air entre les deux disques, et la détection des particules sélectionnées.

18. Procédé de mesure de la granulométrie d'un aérosol, comportant une sélection par un procédé selon l'une des revendications 12 à 14, la détection des particules sélectionnées et le calcul de la granulométrie de l'aérosol.

19. Procédé selon l'une des revendications 11 à 18, les particules d'aérosol étant des particules de diamètre compris entre 1 et 20 μm.

20. Procédé de production d'aérosols monodispersés comportant la mise en oeuvre d'un sélecteur de mobilité dynamique selon l'une quelconque des revendications 2 à 5, ou d'un procédé de sélection de mobilité dynamique des particules d'un aérosol selon l'une quelconque des revendications 12 à 14.

21. Procédé de sélection de particules mettant en oeuvre un sélecteur selon l'une des revendications 1 à 10, ou procédé selon l'une quelconque des revendications 11 à 20, le premier disque, muni d'une fente annulaire d'entrée, étant disposé au-dessus du second disque.

FIG. 1

FIG. 2

FIG. 3A

FIG. 3B

FIG. 4

FIG. 5

Office européen
des brevets

**RAPPORT DE RECHERCHE EUROPEENNE**

Numero de la demande

EP 97 40 0328

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | EP 0 685 725 A (COMMISSARIAT A L'ENERGIE ATOMIQUE) | 1-10 | G01N15/02 |
| A | * le document en entier * | 11-21 | |
| | --- | | |
| X | EP 0 685 727 A (COMMISSARIAT À L'ENERGIE ATOMIQUE) | 1-10 | |
| A | * le document en entier * | 11-21 | |
| | --- | | |
| A | US 4 657 667 A (ETKIN)<br><br>* colonne 2, ligne 43-62; figure 2 * | 1,8,10, 11,17, 18,20,21 | |
| | --- | | |
| A | EP 0 159 002 A (PRODI, VITTORIO)<br><br>* page 9, ligne 14 - page 11, ligne 23; figure 1 * | 1,8,10, 11,17, 18,20,21 | |
| | ----- | | |

DOMAINES TECHNIQUES
RECHERCHES (Int.Cl.6)

G01N

Le présent rapport a été établi pour toutes les revendications

| Lieu de la recherche | Date d'achèvement de la recherche | Examinateur |
|---|---|---|
| LA HAYE | 27 Mai 1997 | Zinngrebe, U |

CATEGORIE DES DOCUMENTS CITES

X : particulièrement pertinent à lui seul
Y : particulièrement pertinent en combinaison avec un
autre document de la même catégorie
A : arrière-plan technologique
O : divulgation non-écrite
P : document intercalaire

T : théorie ou principe à la base de l'invention
E : document de brevet antérieur, mais publié à la
date de dépôt ou après cette date
D : cité dans la demande
L : cité pour d'autres raisons
...................................................................................
& : membre de la même famille, document correspondant

EPO FORM 1503 03.82 (P04C02)